# EUROPÄISCHE PATENTSCHRIFT

(11) **EP 3 903 160 B1**
(45) Veröffentlichungstag und Bekanntmachung des Hinweises auf die Patenterteilung: **15.03.2023**
(21) Anmeldenummer: 19817635.6
(22) Anmeldetag: 05.12.2019
(51) Int. Cl.: G06Q 10/06, G06Q 10/00, G05D 1/02

(54) **VERFAHREN ZUM ZUMINDEST TEILAUTOMATISIERTEN FÜHREN EINES KRAFTFAHRZEUGS**
METHOD FOR THE AT LEAST PARTLY AUTOMATED GUIDANCE OF A MOTOR VEHICLE
PROCÉDÉ DE GUIDAGE PARTIELLEMENT AUTOMATISÉ D'UN VÉHICULE À MOTEUR

(30) Priorität: 28.12.2018 DE 102018251771
(43) Veröffentlichungstag der Anmeldung: 03.11.2021
(73) Patentinhaber: Robert Bosch GmbH, 70442 Stuttgart (DE)
(72) Erfinder: NICODEMUS, Rolf, 74321 Bietigheim-Bissingen (DE); NORDBRUCH, Stefan, 70806 Kornwestheim (DE)
(86) Internationale Anmeldenummer: PCT/EP2019/083812
(87) Internationale Veröffentlichungsnummer: WO 2020/135992

(56) Entgegenhaltungen:
- WO-A1-2015/180090
- DE-A1-102013 201 169
- US-A1- 2015 248 131
- US-A1- 2017 192 423
- US-A1- 2018 326 994

## Beschreibung

Die Erfindung betrifft zwei Verfahren zum zumindest teilautomatisierten Führen eines Kraftfahrzeugs. Die Erfindung betrifft weiter eine Vorrichtung, ein Computerprogramm und ein maschinenlesbares Speichermedium.

### Stand der Technik

Die Offenlegungsschrift DE 10 2013 016 436 A1 offenbart ein Verfahren zum Betrieb eines Sicherheitssystems eines Kraftfahrzeugs.

Die Offenlegungsschrift DE 10 2016 218 382 A1 offenbart ein Verfahren und Vorrichtungen zum autonomen Fahrbetrieb eines Fahrzeugs in einem Notfallmodus.

Die Offenlegungsschrift DE 10 2017 200 871 A1 offenbart eine kooperative Fahrzeugsteuerung.

Die Offenlegungsschrift EP 2 216 197 A1 offenbart ein Verfahren zur Steuerung eines Fahrerassistenzsystems und ein Fahrerassistenzsystem.

Die Offenlegungsschrift DE 10 2013 201 169 A1 offenbart ein bedarfsweise aktivierbares Fernsteuerungssystem für Kraftfahrzeuge über eine Funk-Datenkommunikationsverbindung mit einer Zentrale.

Die Offenlegungsschrift US 2015/248131 A1 offenbart ein Verfahren zur ferngesteuerten Fahrassistenz wobei einem autonomen Fahrzeug ermöglicht wird, in bestimmten vorbestimmten Situationen Unterstützung von einem entfernten Bediener anzufordern.

Die Offenlegungsschrift US 2017/192423 A1 offenbart ein Verfahren zur Unterstützung eines autonomen Fahrzeugs aus der Ferne. Das Verfahren umfasst das Sammeln von Sensordaten des autonomen Fahrzeugs, das Identifizieren eines Szenarios, in dem Unterstützung gewünscht wird und das Erzeugen einer Unterstützungsanforderung auf der Grundlage der Sensordaten, das Übertragen der Unterstützungsanforderung an eine Fernunterstützungsschnittstelle und das Empfangen und Verarbeiten einer Antwort auf die Unterstützungsanforderung.

Die Offenlegungsschrift WO2015/180090 A1 offenbart ein Kontrollzentrum, das einen Fernfahrassistenzdienst bereitstellt. Es kann so konfiguriert sein, dass es Verkehrsdaten von Sensoren empfängt und auf der Grundlage der empfangenen Verkehrsdaten einen Bereich mit stauendem Verkehr innerhalb eines vorgegebenen Bereichs der Sensoren identifiziert. Wenn das Kontrollzentrum eine Anforderung für den Fernfahrassistenzdienst von einem Fahrzeug innerhalb des vorbestimmten Bereichs des Sensors erhält, kann das Kontrollzentrum Fernfahrbefehle erzeugen und an das Fahrzeug übertragen.

Die US 2018/0326994 A1 beschreibt eine Vorrichtung und ein Verfahren zur Durchführung einer autonomen Steuerungsübergabe zur Übergabe der vorrangigen Steuerung von einer Fahrzeugsteuereinheit an einen Fahrzeugführer. Im Betrieb kann ein autonomes Steuerungsübergabeereignis erkannt werden, das einen Übergang von einer ersten Fahrzeugautomatisierungsstufe zu einer zweiten, niedrigeren Fahrzeugautomatisierungsstufe auslöst.

### Offenbarung der Erfindung

Die der Erfindung zugrundeliegende Aufgabe ist darin zu sehen, ein Konzept zum effizienten zumindest teilautomatisierten Führen eines Kraftfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum zumindest teilautomatisierten Führen eines Kraftfahrzeugs bereitgestellt, umfassend die folgenden Schritte: Empfangen von Anfragesignalen, welche eine Anfrage des Kraftfahrzeugs repräsentieren, dass das Kraftfahrzeug ferngesteuert werden soll, um das Kraftfahrzeug zumindest teilautomatisiert entfernt zu führen,
Prüfen ansprechend auf den Empfang der Anfragesignale, ob der Anfrage entsprochen werden kann,
wenn ja, Erzeugen von Fernsteuersignalen zum zumindest teilautomatisierten Fernsteuern einer Quer- und Längsführung des Kraftfahrzeugs und Ausgeben der erzeugten Fernsteuersignale, um das Kraftfahrzeug basierend auf den erzeugten Fernsteuersignalen zumindest teilautomatisiert entfernt zu führen.

Nach einem zweiten Aspekt wird ein Verfahren zum zumindest teilautomatisierten Führen eines Kraftfahrzeugs bereitgestellt, umfassend die folgenden Schritte:
während einer zumindest teilautomatisierten ferngesteuerten Quer- und
Längsführung des Kraftfahrzeugs, um das Kraftfahrzeug zumindest teilautomatisiert entfernt zu führen, Empfangen von Anfragesignalen, welche eine Anfrage an das ferngesteuerte Kraftfahrzeug und/oder an einen Führer des ferngesteuerten Kraftfahrzeugs repräsentieren, dass das zumindest teilautomatisierte entfernte Führen zurück an das Kraftfahrzeug oder an den Führer übergeben werden soll,
Prüfen ansprechend auf den Empfang der Anfragesignale, ob der Anfrage entsprochen werden kann,
wenn ja, Erzeugen von Steuersignalen zum zumindest teilautomatisierten Steuern einer Quer- und Längsführung des Kraftfahrzeugs und Ausgeben der erzeugten Steuersignale, um das Kraftfahrzeug basierend auf den erzeugten Steuersignalen zumindest teilautomatisiert zu führen.

Nach einem dritten Aspekt wird eine Vorrichtung bereitgestellt, die eingerichtet ist, alle Schritte des Verfahrens nach dem ersten und/oder nach dem zweiten Aspekt auszuführen.

Nach einem vierten Aspekt wird ein Computerprogramm bereitgestellt, welches Befehle umfasst, die bei Ausführung des Computerprogramms durch einen Computer, beispielsweise durch die Vorrichtung nach dem dritten Aspekt, diesen veranlassen, ein Verfahren nach dem ersten und/oder nach dem zweiten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis, dass die obige Aufgabe dadurch gelöst werden kann, dass vor einer Fernsteuerung des Kraftfahrzeugs geprüft wird, ob das Kraftfahrzeug überhaupt ferngesteuert werden kann bzw. dass bei einer Fernsteuerung vor einer Rückübergabe der zumindest teilautomatisierten Führung an das Kraftfahrzeug geprüft wird, ob das Kraftfahrzeug bereit ist, die Führung zu übernehmen bzw. ob der Fahrer zum Beispiel bereit ist, die Rückübergabe zu überwachen.

Dadurch wird zum Beispiel der technische Vorteil bewirkt, dass das Kraftfahrzeug effizient zumindest teilautomatisiert geführt werden kann.

Insbesondere bewirkt das hier beschriebene Konzept insbesondere den technischen Vorteil, dass folgendes Szenario effizient durchlaufen werden kann:
Es gibt Situationen, die für ein zumindest teilautomatisiert geführtes Kraftfahrzeug schwierig bis gar nicht zu bewältigen sind. Solche Situationen können zum Beispiel Kreuzungssituationen sein, die in der Regel komplexe Situationen darstellen, beispielsweise, weil ein Straßenverlauf von kreuzenden Straßen der Kreuzung nicht einsehbar sind durch ein Umfeldsensorsystem des Kraftfahrzeugs.

Solche Situationen umfassen beispielsweise Hügelkuppen, da auch hier ein Straßenverlauf kaum oder nicht sensorisch erfassbar ist, welcher sich hinter der Hügelkuppe befindet.

Solche Situationen umfassen zum Beispiel Menschenansammlungen, beispielsweise an einer Bushaltestelle.

Sofern in einer solchen Situation das Kraftfahrzeug weiter zumindest teilautomatisiert geführt würde, könnten sich ein Risiko von Fehlern und damit eine Gefahr von Unfällen erhöhen.

Das hier beschriebene Konzept ermöglicht es nun, dass in solchen Situationen das Kraftfahrzeug ferngesteuert wird, sodass diese Situationen, die für das Kraftfahrzeug selbst schwierig bis gar nicht zu bewältigen wären, effizient bewältigt werden können.

Dadurch wird zum Beispiel der technische Vorteil bewirkt, dass ein Risiko von Fehlern und damit eine Gefahr von Unfällen effizient verringert werden können.

Zusammenfassend wird somit insbesondere der technische Vorteil bewirkt, dass ein Konzept zum effizienten zumindest teilautomatisierten Führen eines Kraftfahrzeugs bereitgestellt ist.

Die Formulierung "zumindest teilautomatisiertes Steuern bzw. Führen" umfasst die folgenden Fälle: Teilautomatisiertes Steuern bzw. Führen, hochautomatisiertes Steuern bzw. Führen, vollautomatisiertes Steuern bzw. Führen, fahrerloses Steuern bzw. Führen, Fernsteuern des Kraftfahrzeugs.

Teilautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss aber das automatische Steuern der Längs- und Querführung dauerhaft überwachen, um bei Bedarf manuell eingreifen zu können.

Hochautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben. Der Fahrer muss also potenziell in der Lage sein, dass Steuern der Längs- und Querführung zu übernehmen.

Vollautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. In dem spezifischen Anwendungsfall ist der Fahrer nicht erforderlich.

Fahrerloses Steuern bzw. Führen bedeutet, dass unabhängig von einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. Die Längs- und Querführung des Fahrzeugs werden somit zum Beispiel bei allen Straßentypen, Geschwindigkeitsbereichen und Umweltbedingungen automatisch gesteuert. Die vollständige Fahraufgabe des Fahrers wird somit automatisch übernommen. Der Fahrer ist somit nicht mehr erforderlich. Das Kraftfahrzeug kann also auch ohne Fahrer von einer beliebigen Startposition zu einer beliebigen Zielposition fahren. Potentielle Probleme werden automatisch gelöst, also ohne Hilfe des Fahrers.

Ein Fernsteuern des Kraftfahrzeugs bedeutet, dass eine Quer- und Längsführung des Kraftfahrzeugs ferngesteuert werden. Das heißt beispielsweise, dass Fernsteuerungssignale zum Fernsteuern der Quer- und Längsführung an das Kraftfahrzeug gesendet werden. Das Fernsteuern wird zum Beispiel mittels einer Fernsteuerungseinrichtung durchgeführt.

In einer Ausführungsform ist vorgesehen, dass mit dem Fernsteuern des Kraftfahrzeugs begonnen wird, während das Kraftfahrzeug sich bewegt oder während das Kraftfahrzeug steht.

In einer Ausführungsform ist vorgesehen, dass das Fernsteuern des Kraftfahrzeugs beendet wird, während das Kraftfahrzeug sich bewegt oder während das Kraftfahrzeug steht.

In einer Ausführungsform ist vorgesehen, dass Hinweissignale ausgegeben werden, welche einen Hinweis repräsentieren, dass eine entfernt zumindest teilautomatisierte Führung eines Kraftfahrzeugs möglich ist bzw. vorgegeben ist, beispielsweise durch einen Gesetzgeber bzw. aufgrund gesetzlicher Regelungen.

Dadurch wird zum Beispiel der technische Vorteil bewirkt, dass ein Kraftfahrzeug effizient Kenntnis darüber erlangen kann, dass eine entfernt zumindest teilautomatisierte Führung eines Kraftfahrzeugs möglich ist bzw. vorgegeben ist.

Nach einer Ausführungsform ist vorgesehen, dass die Anfrage eine Anfangsposition oder einen Anfangsbereich umfasst, an welcher oder innerhalb welchen mit dem Fernsteuern des Kraftfahrzeugs begonnen werden soll, wenn sich das Kraftfahrzeug an der Anfangsposition oder innerhalb des Anfangsbereichs befindet, wobei, wenn der Anfrage entsprochen werden kann, die Fernsteuersignale derart erzeugt und ausgegeben werden, dass mit dem Fernsteuern begonnen werden kann, wenn sich das Kraftfahrzeug an der Anfangsposition oder innerhalb des Anfangsbereichs befindet.

Dadurch wird zum Beispiel der technische Vorteil bewirkt, dass mit dem Fernsteuern des Kraftfahrzeugs effizient begonnen werden kann. Insbesondere wird dadurch der technische Vorteil bewirkt, dass im Vorfeld bereits bekannt ist, wo mit dem Fernsteuern des Kraftfahrzeugs begonnen werden soll. Dadurch kann beispielsweise eine hierfür notwendige Planung effizient durchgeführt werden.

Nach einer Ausführungsform ist vorgesehen, dass die Anfrage eine Endposition oder einen Endbereich umfasst, an welcher oder innerhalb welchen das Fernsteuern des Kraftfahrzeugs beendet werden soll, wenn sich das Kraftfahrzeug an der Endposition oder innerhalb des Endbereichs befindet, wobei, wenn der Anfrage entsprochen werden kann, die Fernsteuersignale derart erzeugt und ausgegeben werden, dass das Fernsteuern beendet werden kann, wenn sich das Kraftfahrzeug an der Endposition oder innerhalb des Endbereichs befindet.

Dadurch wird zum Beispiel der technische Vorteil bewirkt, dass im Vorfeld bereits bekannt ist, wo mit dem Fernsteuern des Kraftfahrzeugs aufgehört werden soll. Dadurch kann zum Beispiel in vorteilhafter Weise eine entsprechende Planung effizient durchgeführt werden.

Nach einer Ausführungsform ist vorgesehen, dass die Anfrage eine Anfangszeit umfasst, zu welcher mit dem Fernsteuern des Kraftfahrzeugs begonnen werden soll, wobei, wenn der Anfrage entsprochen werden kann, die Fernsteuersignale derart erzeugt und ausgegeben werden, dass mit dem Fernsteuern zu der Anfangszeit begonnen werden kann.

Dadurch wird zum Beispiel der technische Vorteil bewirkt, dass das Fernsteuern effizient durchgeführt werden kann.

Nach einer Ausführungsform ist vorgesehen, dass die Anfrage eine Endzeit umfasst, zu welcher das Fernsteuern beendet werden soll, wobei, wenn der Anfrage entsprochen werden kann, die Fernsteuersignale derart erzeugt und ausgegeben werden, dass das Fernsteuern zu der Endzeit beendet werden kann.

Dadurch wird zum Beispiel der technische Vorteil bewirkt, dass das Fernsteuern effizient durchgeführt werden kann.

Die Anfangsposition bzw. der Anfangsbereich und die Endposition bzw. der Endbereich sind beispielsweise zwei nacheinander liegende Positionen bzw. zwei nacheinander liegende Bereiche entlang einer Route des Kraftfahrzeugs.

Die Route wird zum Beispiel mittels eines Navigationssystems bereitgestellt.

Das heißt also, dass zum Beispiel vorgesehen ist, dass die Anfrage umfasst, dass das Kraftfahrzeug auf einem vorbestimmten Abschnitt einer Route des Kraftfahrzeugs ferngesteuert werden soll. Dieser vorbestimmte Abschnitt ist durch die Anfangsposition bzw. den Anfangsbereich und die Endposition bzw. den Endbereich festgelegt.

Bei der vorstehend beschriebenen Anfangszeit respektive Endzeit kann es sich beispielsweise um eine prädizierte Anfangszeit respektive eine prädizierte Endzeit handeln.

Eine prädizierte Anfangszeit bezeichnet eine Zeit, zu welcher das Kraftfahrzeug mit einer vorbestimmten Wahrscheinlichkeit an der Anfangsposition bzw. an dem Anfangsbereich ankommt.

Analog gilt dies für die prädizierte Endzeit. Eine solche prädizierte Endzeit bezeichnet eine Zeit, zu welcher das Kraftfahrzeug mit einer vorbestimmten Wahrscheinlichkeit an der Endposition bzw. an dem Endbereich ankommt.

Das heißt also zum Beispiel, dass eine Bewegung des Kraftfahrzeugs prädiziert wird, um die Anfangs- respektive Endzeit zu prädizieren.

Gemäß einer Ausführungsform ist vorgesehen, dass vor einem Beenden des Fernsteuerns des Kraftfahrzeugs, weitere Anfragesignale erzeugt und ausgegeben werden, welche eine weitere Anfrage an das Kraftfahrzeug und/oder an einen Führer des Kraftfahrzeugs repräsentieren, dass das zumindest teilautomatisierte entfernte Führen zurück an das Kraftfahrzeug oder an den Führer übergeben werden soll, wobei das Fernsteuern des Kraftfahrzeugs abhängig von einer Reaktion auf die weitere Anfrage beendet wird.

Dadurch wird zum Beispiel der technische Vorteil bewirkt, dass das Fernsteuern effizient beendet werden kann. Insbesondere wird dadurch der technische Vorteil bewirkt, dass das Kraftfahrzeug respektive der Führer des Kraftfahrzeugs effizient in Kenntnis gesetzt werden können, dass das Fernsteuern zeitnah beendet wird.

Nach einer Ausführungsform ist vorgesehen, dass bei einem Ausbleiben einer Reaktion des Kraftfahrzeugs und/oder des Führers auf die weitere Anfrage das Erzeugen der Fernsteuersignale ein Erzeugen von Fernsteuersignalen zum ferngesteuerten Überführen des Kraftfahrzeugs in einen sicheren Zustand umfasst, um das Kraftfahrzeug basierend auf den erzeugten Fernsteuersignalen ferngesteuert in einen sicheren Zustand zu überführen.

Dadurch wird zum Beispiel der technische Vorteil bewirkt, dass auf ein Ausbleiben einer Reaktion des Kraftfahrzeugs und/oder des Führers des Kraftfahrzeugs effizient reagiert werden kann.

Gemäß einer anderen Ausführungsform ist vorgesehen, dass bei einem Ausbleiben einer Reaktion des Kraftfahrzeugs und/oder des Führers auf die weitere Anfrage Lichtsignalanlagensteuersignale zum Steuern einer oder mehrerer Lichtsignalanlagen, welche sich in einer Umgebung des Kraftfahrzeugs befinden, derart erzeugt und ausgegeben werden, dass bei einem Steuern der einen oder der mehreren Lichtsignalanlagen basierend auf den Lichtsignalsteuersignalen diese unter Verwendung ihrer Signalbilder einen Verkehr für das Kraftfahrzeug absperren können.

Dadurch wird zum Beispiel der technische Vorteil bewirkt, dass auf ein Ausbleiben einer Reaktion des Kraftfahrzeugs und/oder des Führers des Kraftfahrzeugs effizient reagiert werden kann.

Erfindungsgemäß ist vorgesehen, dass das Prüfen, ob der Anfrage entsprochen werden kann, ein Prüfen umfasst, ob eine oder mehrere Bedingungen erfüllt sind, wobei der Anfrage nur dann entsprochen wird, wenn eine oder mehrere oder alle der einen oder der mehreren Bedingungen erfüllt sind.

Dadurch wird zum Beispiel der technische Vorteil bewirkt, dass das Prüfen effizient durchgeführt werden kann. Insbesondere kann dadurch effizient festgelegt werden, unter welchen Voraussetzungen das Fernsteuern des Kraftfahrzeugs zulässig ist.

Erfindungsgemäß ist vorgesehen, dass die eine oder die mehreren Bedingungen jeweils ein Element ausgewählt aus der folgenden Gruppe von Bedingungen sind: eine Vorrichtung zum zumindest teilautomatisierten Führen eines Kraftfahrzeugs, welche die Schritte des Verfahrens zum zumindest teilautomatisierten Führen eines Kraftfahrzeugs ausführt, ist in Betrieb und vollständig funktionsfähig, Ist-Wetter entspricht einem Soll-Wetter, Ist-Verkehrszustand in einer Umgebung des Kraftfahrzeugs entspricht einem Soll-Verkehrszustand, Ist-Verkehrsinfrastruktur in einer Umgebung des Kraftfahrzeugs entspricht einer Soll-Verkehrsinfrastruktur, Rechenkapazität der Vorrichtung zum zumindest teilautomatisierten Führen eines Kraftfahrzeugs ist gleich oder größer-gleich einem vorbestimmten Rechenkapazitätsschwellwert, die Vorrichtung zum zumindest teilautomatisierten Führen eines Kraftfahrzeugs ist in der Lage, das anfragende Kraftfahrzeug fernzusteuern, das anfragende Kraftfahrzeug ist in der Lage, ferngesteuert zu werden, notwendige Bedingungen für ein ordnungsgemäßes Funktionieren der Fernsteuerung sind erfüllt, das Durchführen der Fernsteuerung wurde bezahlt.

Dadurch wird zum Beispiel der technische Vorteil bewirkt, dass effizient auf unterschiedliche Situationen reagiert werden kann.

Nach einer Ausführungsform ist vorgesehen, dass es sich bei den Anfragesignalen beim Verfahren gemäß dem zweiten Aspekt um die weiteren Anfragesignale handelt, die bei einer Ausführungsform des Verfahrens nach dem ersten Aspekt vorgesehen sein können.

Technische Funktionalitäten der Vorrichtung ergeben sich analog aus entsprechenden Funktionalitäten des oder der Verfahren und umgekehrt.

Gemäß des Verfahrens nach dem zweiten Aspekt ist vorgesehen, dass das Prüfen, ob der Anfrage entsprochen werden kann, ein Prüfen umfasst, ob eine oder mehrere Bedingungen erfüllt sind, wobei der Anfrage nur dann entsprochen wird, wenn eine oder mehrere oder alle der einen oder der mehreren Bedingungen erfüllt sind.

In einer Ausführungsform des Verfahrens nach dem zweiten Aspekt ist vorgesehen, dass die eine oder die mehreren Bedingungen jeweils ein Element ausgewählt aus der folgenden Gruppe von Bedingungen sind: eine kraftfahrzeuginterne Vorrichtung zum zumindest teilautomatisierten Führen eines Kraftfahrzeugs, welche die Schritte des Verfahrens zum zumindest teilautomatisierten Führen eines Kraftfahrzeugs ausführen kann, ist in Betrieb und vollständig funktionsfähig, Ist-Wetter entspricht einem Soll-Wetter, Ist-Verkehrszustand in einer Umgebung des Kraftfahrzeugs entspricht einem Soll-Verkehrszustand, Ist-Verkehrsinfrastruktur in einer Umgebung des Kraftfahrzeugs entspricht einer Soll-Verkehrsinfrastruktur, Rechenkapazität der kraftfahrzeuginternen Vorrichtung zum zumindest teilautomatisierten Führen eines Kraftfahrzeugs ist gleich oder größer-gleich einem vorbestimmten Rechenkapazitätsschwellwert, die kraftfahrzeuginterne Vorrichtung zum zumindest teilautomatisierten Führen eines Kraftfahrzeugs ist in der Lage, das zumindest teilautomatisierte Führen zu übernehmen.

Nach einer Ausführungsform ist das Kraftfahrzeug von einem Roboter umfasst bzw. ist als ein Roboter gebildet, welcher beispielsweise in einer Logistikfabrik eingesetzt werden kann.

Nach einer Ausführungsform ist das Kraftfahrzeug ein Shuttle.

Die Abkürzung "bzw." steht für "beziehungsweise".

Die Formulierung "bzw." steht insbesondere für "respektive".

Die Formulierung "respektive" steht insbesondere für "und/oder".

In einer Ausführungsform ist das Verfahren nach dem ersten Aspekt und/oder ist das Verfahren nach dem zweiten Aspekt ein computerimplementiertes Verfahren.

In einer Ausführungsform ist vorgesehen, dass das Kraftfahrzeug, von welchem die Anfrage stammt, steht oder manuell von einem Fahrer gefahren wird.

Ausführungsbeispiele der Erfindung sind in den Zeichnungen dargestellt und in der nachfolgenden Beschreibung näher erläutert. Es zeigen:
Figur 1 ein Ablaufdiagramm eines Verfahrens zum zumindest teilautomatisierten Führen eines Kraftfahrzeugs gemäß dem ersten Aspekt nach einer ersten Ausführungsform,
Figur 2 ein Ablaufdiagramm eines Verfahrens zum zumindest teilautomatisierten Führen eines Kraftfahrzeugs nach dem zweiten Aspekt gemäß einer ersten Ausführungsform,
Figur 3 eine Vorrichtung, welche eingerichtet ist, alle Schritte des Verfahrens nach dem ersten und/oder zweiten Aspekt auszuführen,
Figur 4 ein maschinenlesbares Speichermedium und
Figur 5 eine beispielhafte Anwendung des hier beschriebenen Konzepts.

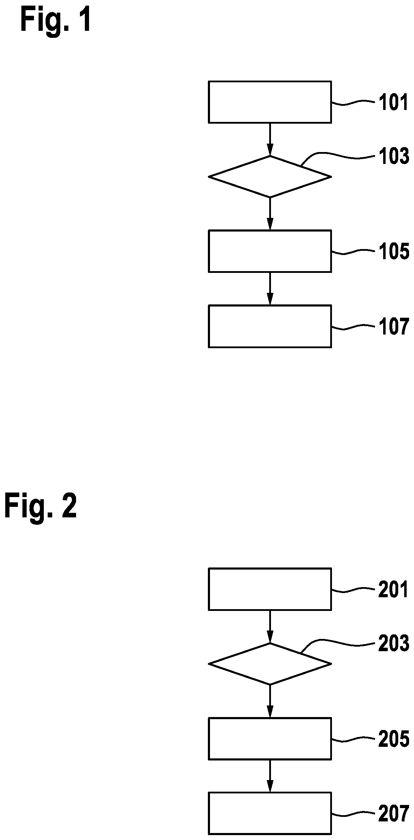

Figur 1 zeigt ein Ablaufdiagramm eines Verfahrens zum zumindest teilautomatisierten Führen eines Kraftfahrzeugs, umfassend die folgenden Schritte:
Empfangen 101 von Anfragesignalen, welche eine Anfrage des Kraftfahrzeugs repräsentieren, dass das Kraftfahrzeug ferngesteuert werden soll, um das Kraftfahrzeug zumindest teilautomatisiert entfernt zu führen,
Prüfen 103 ansprechend auf den Empfang der Anfragesignale, ob der Anfrage entsprochen werden kann,
wenn ja, Erzeugen 105 von Fernsteuersignalen zum zumindest teilautomatisierten Fernsteuern einer Quer- und Längsführung des Kraftfahrzeugs und
Ausgeben 107 der erzeugten Fernsteuersignale, um das Kraftfahrzeug basierend auf den erzeugten Fernsteuersignalen zumindest teilautomatisiert entfernt zu führen.

Figur 2 zeigt ein Ablaufdiagramm eines Verfahrens zum zumindest teilautomatisierten Führen eines Kraftfahrzeugs, umfassend die folgenden Schritte:
während einer zumindest teilautomatisierten ferngesteuerten Quer- und Längsführung des Kraftfahrzeugs, um das Kraftfahrzeug zumindest teilautomatisiert entfernt zu führen, Empfangen 201 von Anfragesignalen, welche eine Anfrage an das ferngesteuerte Kraftfahrzeug und/oder an einen Führer des ferngesteuerten Kraftfahrzeugs repräsentieren, dass das zumindest teilautomatisierte entfernte Führen zurück an das Kraftfahrzeug oder an den Führer übergeben werden soll,
Prüfen 203 ansprechend auf den Empfang der Anfragesignale, ob der Anfrage entsprochen werden kann,
wenn ja, Erzeugen 205 von Steuersignalen zum zumindest teilautomatisierten Steuern einer Quer- und Längsführung des Kraftfahrzeugs und Ausgeben 207 der erzeugten Steuersignale, um das Kraftfahrzeug basierend auf den erzeugten Steuersignalen zumindest teilautomatisiert zu führen.

In einer nicht gezeigten Ausführungsform ist vorgesehen, dass wenn das Prüfen gemäß dem Schritt 103 bzw. 203 ergeben hat, dass der Anfrage nicht entsprochen werden kann, dass Antwortsignale erzeugt und ausgegeben werden, welche eine Antwort repräsentieren, dass der Anfrage nicht entsprochen werden kann.

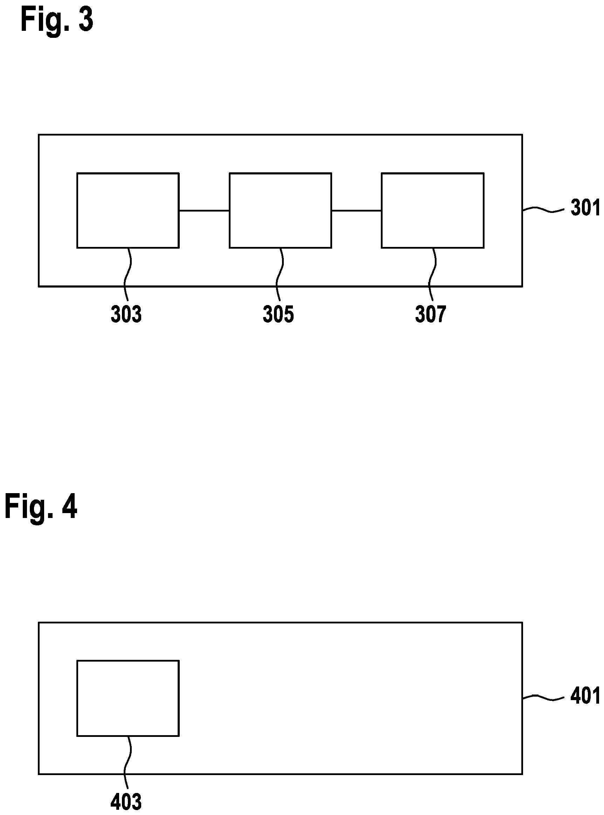

Figur 3 zeigt eine Vorrichtung 301.

Die Vorrichtung 301 ist eingerichtet, alle Schritte des Verfahrens nach dem ersten und/oder zweiten Aspekt auszuführen.

Die Vorrichtung 301 umfasst einen Eingang 303, welcher eingerichtet ist, die vor- und/oder nachstehend beschriebenen Anfragesignale zu empfangen.

Die Vorrichtung 301 umfasst weiter einen Prozessor 305, welcher eingerichtet ist, den vorstehend beschriebenen und/oder nachstehend beschriebenen Schritt des Prüfens auszuführen. Der Prozessor 305 ist weiter eingerichtet, den vor- und/oder nachstehend beschriebenen Schritt des Erzeugens auszuführen.

Die Vorrichtung 301 umfasst weiter einen Ausgang 307, welcher eingerichtet ist, die erzeugten Steuersignale auszugeben.

Signale, welche mittels der Vorrichtung 301 empfangen werden, werden insbesondere allgemein mittels des Eingangs 303 empfangen. Der Eingang 303 ist hierfür insbesondere entsprechend eingerichtet.

Signale, welche mittels der Vorrichtung 301 ausgegeben werden, werden insbesondere mittels des Ausgangs 307 ausgegeben. Der Ausgang 307 ist hierfür insbesondere entsprechend eingerichtet.

Der Eingang 303 respektive der Ausgang 307 sind somit eingerichtet, entsprechende Signale zu empfangen respektive auszugeben.

In einer Ausführungsform sind anstelle des einen Prozessors 305 mehrere Prozessoren vorgesehen.

Figur 4 zeigt ein maschinenlesbares Speichermedium 401.

Auf dem maschinenlesbaren Speichermedium 401 ist ein Computerprogramm 403 gespeichert. Das Computerprogramm 403 umfasst Befehle, die bei Ausführung des Computerprogramms 403 durch einen Computer diesen veranlassen, ein Verfahren gemäß dem ersten und/oder gemäß dem zweiten Aspekt auszuführen.

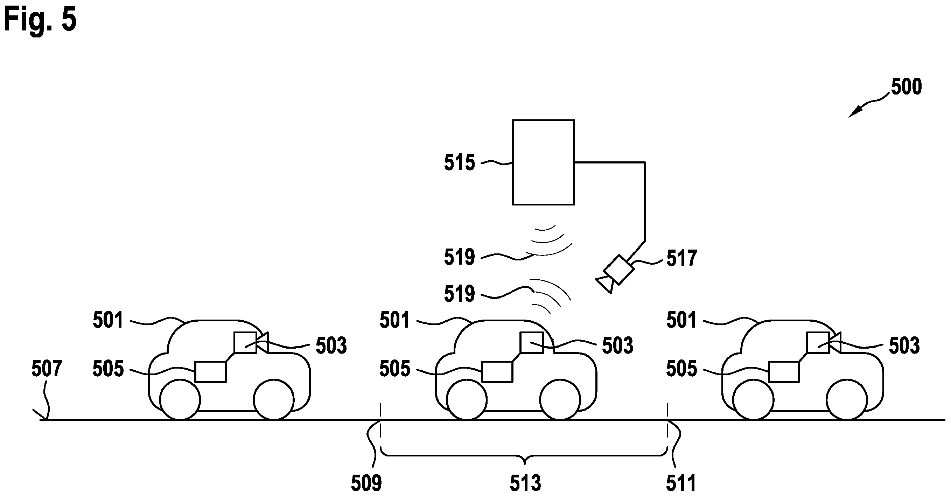

Figur 5 zeigt ein Anwendungsszenario 500 des hier beschriebenen Konzepts.

In dem Anwendungsszenario 500 ist beispielhaft ein Kraftfahrzeug 501 umfassend eine Videokamera 503 und umfassend eine Vorrichtung 505 vorgesehen, welche eingerichtet ist, alle Schritte des Verfahrens nach dem zweiten Aspekt auszuführen, wobei das Kraftfahrzeug 501 auf einer Straße 507.

Gemäß der hier gezeigten Ausführungsform ist die Vorrichtung 505 eingerichtet, das Kraftfahrzeug 501 zumindest teilautomatisiert zu führen. Das heißt, dass die Vorrichtung 505 eingerichtet ist, eine Quer- und Längsführung des Kraftfahrzeugs 501 zumindest teilautomatisiert zu steuern.

Dieses Steuern wird unter anderem basierend auf einer Erfassung einer Umgebung des Kraftfahrzeugs 501 mittels der Videokamera 503 durchgeführt.

Die Videokamera 503 steht hier stellvertretend für ein Umfeldsensorsystem, welches nicht im Detail weiter gezeigt ist, des Kraftfahrzeugs 501. Ein solches Umfeldsensorsystem umfasst ein oder mehrere Umfeldsensoren.

Ein Umfeldsensor im Sinne der Beschreibung ist beispielsweise einer der folgenden Umfeldsensoren: Radarsensor, Lidarsensor, Videosensor, Infrarotsensor, Magnetfeldsensor, Ultraschallsensor, Magnetfeldsensor.

Das heißt also insbesondere, dass das Kraftfahrzeug 501 ein Umfeldsensorsystem umfassend einen oder mehrere Umfeldsensoren umfassen kann.

Mit den Bezugszeichen 509, 511 sind zwei bezogen auf eine Fahrtrichtung des Kraftfahrzeugs 501 nacheinander folgende Orte bzw. Positionen auf der Straße 507 gekennzeichnet.

Diese beiden Orte 509, 511 legen somit einen Abschnitt 513 einer Route des Kraftfahrzeugs 501 fest.

Innerhalb des Abschnitts 513 ist es dem Kraftfahrzeug 501 nicht möglich, zumindest teilautomatisiert selbst zu fahren.

Das heißt also, dass die Vorrichtung 505 innerhalb des Abschnitts 513 nicht in der Lage ist, das Kraftfahrzeug 501 zumindest teilautomatisiert zu führen.

Dies kann zum Beispiel daher begründet sein, dass sich innerhalb des Abschnitts 513 eine Hügelkuppe befindet, sodass die Umfeldsensoren des Kraftfahrzeugs 501 nicht hinter diese Hügelkuppe "blicken" können. Das heißt also, dass die Umfeldsensoren des Kraftfahrzeugs 501 eine Straße, welche bezogen auf die Fahrtrichtung des Kraftfahrzeugs 501 hinter der Hügelkuppe liegt, sensorisch nicht erfassen können.

Es ist gemäß dem hier beschriebenen Konzept vorgesehen, dass das Kraftfahrzeug 501 innerhalb des Abschnitts 513 zumindest teilautomatisiert entfernt geführt wird. Das heißt also, dass das Kraftfahrzeug 501 innerhalb des Abschnitts 513 ferngesteuert wird.

Hierfür ist eine weitere Vorrichtung 515 vorgesehen, welche eingerichtet ist, alle Schritte des Verfahrens gemäß dem ersten Aspekt auszuführen.

Innerhalb des Abschnitts 513 ist eine weitere Videokamera 517 angeordnet, welche eine Umgebung des Kraftfahrzeugs 501 erfassen kann. Insbesondere kann eine solche Videokamera 517 Bereiche innerhalb des Abschnitts 513 erfassen, welche durch ein Umfeldsensorsystem des Kraftfahrzeugs 501 nicht erfasst werden können.

Analog zur Videokamera 503 des Kraftfahrzeugs 501 steht die weitere Videokamera 517 stellvertretend für ein weiteres Umfeldsensorsystem umfassend einen oder mehrere Umfeldsensoren, welche räumlich verteilt innerhalb des Abschnitts 513 angeordnet sind.

Die Vorrichtung 515 verwendet die der jeweiligen Erfassung der Umfeldsensoren entsprechenden Umfeldsensordaten des weiteren Umfeldsensorsystems, um das Kraftfahrzeug 501 fernzusteuern.

Eine Kommunikation zwischen dem Kraftfahrzeug 501 und der Vorrichtung 515 ist symbolisch mittels wellenförmigen Elementen 519 gekennzeichnet.

Noch bevor das Kraftfahrzeug 501 die Position 509, welche der vorstehend beschriebenen Anfangsposition entspricht, erreicht, sendet die Vorrichtung 505 Anfragesignale an die weitere Vorrichtung 515, wobei diese Anfragesignale eine Anfrage des Kraftfahrzeugs 501 repräsentieren, dass das Kraftfahrzeug 501 innerhalb des Abschnitts 513 ferngesteuert werden soll.

Die Vorrichtung 515 prüft ansprechend auf den Empfang der Anfragesignale, ob der Anfrage entsprochen werden kann. Wenn ja, erzeugt die Vorrichtung 515 entsprechende Fernsteuersignale und gibt diese aus, um das Kraftfahrzeug basierend auf den erzeugten Fernsteuersignalen innerhalb des Abschnitts 513 zumindest teilautomatisiert entfernt zu führen.

Die Vorrichtung 515 sendet zum Beispiel diese Fernsteuersignale an das Kraftfahrzeug 501, genauer an die Vorrichtung 505.

Das heißt also allgemein, dass das Ausgeben der erzeugten Fernsteuersignale zum Beispiel ein Senden der erzeugten Fernsteuersignale über ein drahtloses Kommunikationsnetzwerk an das Kraftfahrzeug 501 umfassen kann.

Gleiches gilt allgemein analog für das Empfangen von Anfragesignalen, welche über das drahtlose Kommunikationsnetzwerk empfangen werden können.

Für die Kommunikation zwischen der Vorrichtung 505 und der weiteren Vorrichtung 515 ist insbesondere vorgesehen, dass jede der Vorrichtungen 505, 515 eine Kommunikationsschnittstelle umfasst, welche eingerichtet ist, entsprechende Signale zu senden respektive zu empfangen.

Das heißt also, dass vor der Anfangsposition 509 eine Verantwortung für die Kraftfahrzeugführung beim Kraftfahrzeug 501 bleibt: Innerhalb des Abschnitts 513 ist die Verantwortung für die Kraftfahrzeugführung bei der weiteren Vorrichtung 515.

Das heißt also, dass die Verantwortung für die Kraftfahrzeugführung vom Kraftfahrzeug 501 auf die weitere Vorrichtung 515 übergegangen ist.

Die Anfrage des Kraftfahrzeugs 501 umfasst weiter die zweite Position 511, an welcher mit dem Fernsteuern aufgehört werden soll. Die Position 511 entspricht der vorstehend beschriebenen Endposition.

Die weitere Vorrichtung 515 weiß somit, bis zu welchem Ort entlang der Route des Kraftfahrzeugs 501 das Kraftfahrzeug 501 ferngesteuert werden soll.

Kurz bevor das Kraftfahrzeug 501 die Endposition 511 erreicht, also vor einem Beenden des Fernsteuerns des Kraftfahrzeugs 501, erzeugt die weitere Vorrichtung 515 weitere Anfragesignale und gibt diese aus, wobei diese weiteren Anfragesignale eine weitere Anfrage an das Kraftfahrzeug 501 und/oder an einen Führer des Kraftfahrzeugs 501 repräsentieren, dass das zumindest teilautomatisierte entfernte Führen zurück an das Kraftfahrzeug 501 oder an den Führer übergeben werden soll.

Abhängig von einer Reaktion auf diese weitere Anfrage wird dann das Fernsteuern des Kraftfahrzeugs 501 beendet.

Ansprechend auf einen Empfang der weiteren Anfragesignale prüft beispielsweise die Vorrichtung 505, ob dieser weiteren Anfrage entsprochen werden kann. Wenn ja, quittiert die Vorrichtung 505 bzw. bestätigt diese die weitere Anfrage, indem die Vorrichtung 505 beispielsweise eine entsprechende Quittierungs- bzw. Bestätigungsnachricht an die weitere Vorrichtung 515 über das drahtlose Kommunikationsnetzwerk sendet.

Wenn dann das Kraftfahrzeug 501 die Endposition 511 erreicht, so wird das Fernsteuern seitens der weiteren Vorrichtung 515 beendet und das Kraftfahrzeug 501 übernimmt wieder selbst die zumindest teilautomatisierte Führung des Kraftfahrzeugs.

Sofern beispielsweise die weitere Vorrichtung 515 keine entsprechende Quittierungsnachricht bzw. Bestätigungsnachricht vom Kraftfahrzeug 501 empfängt, ist zum Beispiel vorgesehen, dass die weitere Vorrichtung 515 das Kraftfahrzeug 501 ferngesteuert in einen sicheren Zustand überführt.

Ein sicherer Zustand ist beispielsweise ein Stillstand. Das heißt also beispielsweise, dass die weitere Vorrichtung 515 das Kraftfahrzeug 501 ferngesteuert anhält, sofern zum Beispiel keine entsprechende Quittierungs- bzw. Bestätigungsnachricht empfangen wird.

Zusammenfassend basiert das hier beschriebene Konzept unter anderem insbesondere darauf, dass ein oder mehrere Wechsel der Verantwortung für das Fahren in einer Fahrt durchgeführt wird/werden. Die Verantwortung betrifft zum Beispiel die Gebiete der Sicherheit, der Planung und der Regelung.

D.h., grundsätzlich fährt das Kraftfahrzeug selbst zumindest teilautomatisiert, insbesondere hoch-automatisiert. Dies bedeutet zum Beispiel, dass u.a. die Verantwortung, Planung der Fahraufgaben, die Regelung der Fahraufgabe, die Safety-Verantwortung usw. beim Kraftfahrzeug liegt bzw. durchgeführt wird. Neben Kraftfahrzeug-internen Daten/Intelligenz usw. können externe Daten, Vorschläge usw. (z.B. von einer Infrastruktur/von einem Infrastruktursystem) mit einbezogen werden. Allerdings hat "das letzte Wort" immer das Kraftfahrzeug (Entscheider).

Für Bereiche, die zu komplex, (aktuell) nicht (qualitativ) ausreichend oder gar nicht umgesetzt werden können, usw. wird der Fahrprozess/die Verantwortung innerhalb der Fahrt an ein externes System (die weitere Vorrichtung 515) übergeben. D.h., ab hier hat das externe System die Verantwortung, Planung der Fahraufgaben, die Regelung der Fahraufgabe, die Safety-Verantwortung usw. (Entscheider).

Die Aufgaben werden dabei mit Hilfe einer externen Infrastruktur/eines externen Infrastruktursystems durchgeführt. Externe Daten, Vorschläge usw. (aus Sicht des externen Systems) von dem entfernt zu führenden Kraftahrzeug als auch von anderen Kraftfahrzeugen sowie von anderen externen Systemen/Quellen kann das System dabei mit einbeziehen.

Das heißt, der Prozess ist zum Beispiel wie folgt:
1. Das Kraftfahrzeug fährt selbst hochautomatisiert. (Entscheider/Verantwortung liegt beim Kraftfahrzeug)
2. Es wird festgestellt und/oder es ist bekannt, dass auf der Route im Voraus eine Situation/ein Abschnitt ist, den das Kraftfahrzeug selbst nicht oder ausreichend gut fahren kann.
3. Es wird festgestellt und/oder es ist bekannt, dass in diesem Abschnitt ein externes System (die weitere Vorrichtung 515) zur Verfügung steht.
4. Es wird eine Anfrage an das externe System gestellt, ob das Kraftahrzeug übernommen werden kann, also ob es ferngesteuert werden kann innerhalb des Abschnitts.
5. Sofern das externe System zustimmt (sofern also der Anfrage entsprochen werden kann):
   a. Findet eine Übergabe der Verantwortung statt (Kraftfahrzeug an das externe System); vorzugsweise an einer definierten Stelle bzw. in einem definierten Bereich.
   b. Bei einer erfolgreichen Übergabe der Verantwortung wird das Kraftahrzeug von dem externen System gefahren (Verantwortung liegt beim externen System).
   c. Nach der Situation/dem Abschnitt findet eine Rückübergabe der Verantwortung statt (wieder zum Kraftfahrzeug); vorzugsweise an einer definierten Stelle bzw. in einem definierten Bereich.
   d. Mit einer erfolgreichen Übergabe der Verantwortung fährt das Kraftahrzeug wieder hochautomatisiert (Kraftahrzeug-basiert; Verantwortung liegt beim Kraftfahrzeug).

In einer weiteren Variante kann es sein, dass der Fahrprozess direkt mit der Verantwortung für das externe System startet, also:
1. Kraftfahrzeug wird manuell durch den Fahrer gefahren oder steht noch (Verantwortung liegt beim Fahrer bzw. "noch keiner hat die Verantwortung").
2. Es wird festgestellt und/oder es ist bekannt, dass auf der Route im Voraus eine Situation/ein Abschnitt ist, den das Kraftfahrzeug nicht oder ausreichend gut fahren kann.
3. Es wird eine Anfrage an das externe System gestellt, ob das Kraftfahrzeug übernommen werden kann.
4. Sofern das externe System zustimmt:
   a. Schritte wie oben bei 5.

In einer weiteren Variante kann es sein, dass der Fahrprozess nach der Fahrt durch das externe System beendet ist/wird. D.h., dass das Kraftfahrzeug abgestellt wurde (stehen bleiben oder z.B. auf wird das Kraftfahrzeug auf einem Parkplatz abgestellt).

In einer weiteren Ausführungsform ist vorgesehen, dass der Fahrprozess nach der Fahrt durch das externe System an den Fahrer übergeben wird. Z.B. weil der Fahrer es wollte, oder weil kein Fahrprozess weder per hochautomatisierter Steuerung durch das Kraftfahrzeug noch über das externe System möglich ist (geplant oder/ungeplant).

Sofern irgendwelche Übergaben nicht funktionieren, wird entweder an den Fahrer übergeben und/oder das Kraftfahrzeug in einen sicheren Zustand (zum Beispiel Stillstand) gebracht.

Sofern Fehler bei den Systemen - unabhängig ob während der hochautomatisierten Fahrt des Kraftfahrzeugs selbst oder vom externen System geführten Fahrt - detektiert werden, wird das Kraftfahrzeug entweder an den Fahrer übergeben und/oder das Kraftfahrzeug in den sicheren Zustand (zum Beispiel Stillstand) gebracht. Das heißt also allgemein, dass in einer Ausführungsform vorgesehen ist, dass in bei Detektion eines Fehlers das Kraftfahrzeug zum Beispiel in einen sicheren Zustand überführt wird bzw. das die Verantwortung an den Fahrer übergeben wird.

In einer weiteren Ausführungsform kann die Anfrage einer Übernahme durch das externe System auch schon am Anfang oder vor der Fahrt angefragt und geplant werden. In diesem Fall wird dann zum Beispiel in optimaler Weise kurz vor dem Abschnitt eine erneute Bestätigung (ggf. kann sich ja was geändert haben) durchgeführt.

In einer weiteren können Anfragen für mehrere Bereiche angefragt und/oder geplant werden.

Bei der Anfrage des Übernehmens durch das externe System wird vorzugsweise die gewünschte Route (ggf. gibt es mehrere Möglichkeiten um durch den Abschnitt zu fahren) mit übergeben.

Das System prüft, ob die gewünschte Route möglich ist. Ggf. werden, wenn die gewünschte Route nicht möglich ist, wenn möglich, Alternativen ermittelt. Diese werden dem Kraftfahrzeug (damit ggf. Fahrer) mitgeteilt. Das Kraftfahrzeug (und/oder der Fahrer) kann zum Beispiel in einem zusätzlichen Schritt diese Alternativen annehmen oder ablehnen.

Vorzugsweise werden dem System bei der Anfrage weitere Daten, wie z.B. Fahrzeugdetails, usw., mit für die Planung und Durchführung mitgesendet bzw. mit dem System regelmäßig und/oder auf Anfrage ausgetauscht.

Informationen über die Bereiche und deren Eigenschaften sind u.a. in (Cloud)Daten, Karten, Kriterien, Kommunikationsarten, usw. abrufbar. Vorteilhafter Weise sind diese immer aktuell und spiegeln den aktuellen Stand, der sich ändern kann. Z.B. ist der ein neuer Bereich vorhanden, ein alter angepasst oder nicht mehr vorhanden.

Das externe System zur Führung des Fahrzeuges umfasst zum Beispiel folgendes bzw. ist zum Beispiel wie folgt aufgebaut bzw. geht zum Beispiel von folgenden Annahmen aus:
- Umfeldsensoren (Video, Radar, Lidar, Induktionsschleifen, usw.)
   o Stationär Umfeldsensoren
   o Beweglich Umfeldsensoren (z.B. Drohne)
   o Zum Beispiel Umfeldsensoren von Kraftfahrzeugen (zum Beispiel die Umfeldsensoren des fernzusteuernden Kraftfahrzeugs und/oder Umfeldsensoren von weiteren Kraftfahrzeugen).
- der Abschnitt, innerhalb welchem das Kraftfahrzeug ferngesteuert werden soll, ist bekannt,
- Entscheidungssystem kann nur vor Ort, in der "Cloud", verteilt (vor Ort, Cloud) sein.
- Einzelanalysen können zusätzlich z.B. in den Sensoren/Zwischensystemen durchgeführt werden.
- Kommunikation mit Kraftfahrzeugen über Mobilfunk, WLAN, allgemein über drahtloses Kommunikationsnetzwerke.
- Das System hat vorzugsweise noch Einfluss auf Verkehrsinfrastruktur (Lichtsignalanlagen, usw.) um den Fahrprozess zu vereinfachen/optimieren.

Vorzugsweise werden alle Daten/Aktionen usw. für weitere Analyse, Optimierungen, usw. aber auch für Dokumentationen - z.B. bei Unfällen - (min. temporär) aufgezeichnet.

In einer Ausführungsform ist vorgesehen, dass vor einer Übergabe der Verantwortung vom Kraftfahrzeug zum externen System überprüft wird, ob das externe System diese Verantwortung übernehmen kann.

Die Analyse für das "Ob" wird dabei über/anhand von Kriterien/Daten durchgeführt.

Dabei wird folgendes analysiert (alle oder einige davon):
- In das externe System zu der angefragten/prädizierten Zeit in Betrieb und vollständig funktionsfähig?
- Wird der angefragte Abschnitt zu der Zeit als Service (Service bedeutet Fernsteuerung des anfragenden Kraftfahrzeugs) zur Verfügung gestellt.
- Lassen die Wetterbedingungen zu der angefragten/prädizierten Zeit den Service zu?
- Lässt der Verkehr in der angefragten/prädizierten Zeit den Service zu? Z.B. zur Rushhour könnte der Service nicht angeboten werden (das heißt, dass Grenzen vorhanden sein könnten).
- Lässt die Infrastruktur (Straßen) den Service zu?
   Z.B. können Baustellen, Wartungen, Events usw. eine Fernsteuerung erschweren bzw. unmöglich machen.
- Kann das externe System das Fahrzeug in der angefragten/prädizierten Zeit bzgl. der eigenen Systemgrenzen (z.B. Rechenpower) noch verarbeiten?
   Z.B. könnte eine max. Anzahl von fernzusteuernden Kraftfahrzeugen nur zugelassen werden.
   Sind zu viele zu steuernde Kraftfahrzeuge auf einem Abschnitt?
- Ergeben sich Probleme durch ggf. "kongruierende" Routen der zu steuernden Kraftfahrzeuge?
- Passen das System und das Kraftfahrzeug (kann unterschiedliche Konfigurationen/Generationen/usw.) aufweisen "zueinander"?
- Ist das Kraftfahrzeug aktuell in der Lage sich steuern zu lassen (alle Systeme beim Kraftfahrzeug okay)?
- Ist das Kraftfahrzeug für den Service bei dem System allgemein/für den Abschnitt zugelassen?
   Z.B. könnte es in der Vergangenheit mit dem bestimmen Kraftfahrzeug Probleme gegeben haben und das Kraftfahrzeug ist gesperrt.
- Funktionieren (z.B. durch eine Überprüfung) die technischen Bedingungen (im Kraftfahrzeug, im externen System, in der Zusammenarbeit, in der Kommunikation, usw.)
- Wurde der Service bezahlt?

Abhängig von einer oder von mehreren Antworten auf die vorstehenden Fragen, wird dann insbesondere entschieden, ob der Anfrage entsprochen werden kann.

D.h., der Prozess ist zum Beispiel wie folgt:
- Der Service "Übergabe der Verantwortung" für einen gewissen Abschnitt wird für das Verfahren angefragt
   o Für in kürze/sofort
   o Für eine definierte Zeit/Zeitfenster
- Das System analysiert die Übernahme an Kriterien/Daten
- Das System gibt das Ergebnis zurück
   o Ggf. mit Alternativen bzgl. Zeit, Abschnitt (Startposition, - größe/länge), Fahrbedingungen, Route, ...

In die Berechnungen (z.B. Wetter, Verkehr) werden vorzugsweise historische Daten mitberücksichtigt. Z.B. jeden Montag vor Weihnachten weist der Verkehr einen bestimmten Zustand auf bzw. eine bestimmte Anzahl an Kraftfahrzeugen möchten den Service verwenden.

Zur Optimierung werden die Ergebnisse, Analysen usw. inkl. der Bedingungen gespeichert und für folgende Analysen zur Verfügung gestellt (Lernendes Verhalten).

In einer Ausführungsform ist vorgesehen, dass vor einer Übergabe der Verantwortung vom externen System zum Kraftfahrzeug überprüft wird, ob das Kraftahrzeug diese Verantwortung übernehmen kann.

Die Analyse für das "Ob" wird dabei über/anhand von Kriterien/Daten durchgeführt. Dabei wird zum Beispiel folgendes analysiert (alle oder einige davon oder weitere):
- Kann nach dem Abschnitt hochautomatisiert bzw. Kraftfahrzeug-basiert gefahren werden?
   Ist dieser Abschnitt überhaupt und/oder zu der Zeit freigegeben?
- Lassen die Wetterbedingungen zu der angefragten/prädizierten Zeit eine Kraftfahrzeug-basierte Fahrt zu?
- Lässt der Verkehr in der angefragten/prädizierten Zeit das hochautomatisierte bzw. Kraftfahrzeug-basierte Fahren zu? Z.B. zur Rushhour könnte das Kraftfahrzeug-basierte Fahren nicht erlaubt sein.
- Lässt die Infrastruktur (Straßen) den Service zu? D.h., sind dem Kraftfahrzeug/externen System z.B. Baustellen, Wartungen, Events usw. bekannt.
- Ist das Kraftfahrzeug aktuell in der Lage hochautomatisiert zu fahren (alle Systeme des Kraftfahrzeugs okay)?

Abhängig von einer oder von mehreren Antworten auf die vorstehenden Fragen, wird dann insbesondere entschieden, ob der Anfrage entsprochen werden kann.

D.h., der Prozess ist zum Beispiel wie folgt:
- Der Service "Übergabe der Verantwortung" wird für das Verfahren angefragt
   o Für in kürze/sofort
   o Für eine definierte Zeit/Zeitfenster
- Das Kraftfahrzeug (als späterer Verantworter/Entscheider) analysiert die Übernahme an Kriterien/Daten
   o Vorteilhafter Weise zieht es dabei Daten usw. auch von externen Quellen (externes System, andere Fahrzeuge usw.) hinzu
- Das Kraftfahrzeug gibt das Ergebnis zurück

Ist das Kraftfahrzeug nicht bereit, dann werden zum Beispiel im Folgenden von der Infrastruktur und/oder vom Kraftfahrzeug Aktionen eingeleitet werden. Min. bzw. und/oder:
- Anfrage an Fahrer, ob dieser übernimmt
- Planung und Durchführung von Maßnahmen, die das Kraftfahrzeug in den sicheren Zustand bringen (Stehen; z.B. an definierten Stellen)
- Information von "Service Personal"
- Einleitung von Sicherungsmaßnahmen (z.B. Straßen durch Signalanlagen "sperren")

In die Berechnungen (z.B. Wetter, Verkehr) werden vorzugsweise historische Daten mitberücksichtigt. Z.B. jeden Montag vor Weihnachten ist der Verkehr, X Fahrzeuge möchten den Service verwenden ...

Zur Optimierung werden die Ergebnisse, Analysen usw. inkl. der Bedingungen gespeichert und für folgende Analysen zur Verfügung gestellt (Lernendes Verhalten).

## Patentansprüche

1. Verfahren zum zumindest teilautomatisierten Führen eines Kraftfahrzeugs (501), umfassend die folgenden Schritte:
Empfangen (101) von Anfragesignalen, welche eine Anfrage des Kraftfahrzeugs (501) repräsentieren, dass das Kraftfahrzeug (501) ferngesteuert werden soll, um das Kraftfahrzeug (501) zumindest teilautomatisiert entfernt zu führen,
Prüfen (103) ansprechend auf den Empfang der Anfragesignale, ob der Anfrage entsprochen werden kann,
wenn ja, Erzeugen (105) von Fernsteuersignalen zum zumindest teilautomatisierten Fernsteuern einer Quer- und Längsführung des Kraftfahrzeugs (501) und
Ausgeben (107) der erzeugten Fernsteuersignale, um das Kraftfahrzeug (501) basierend auf den erzeugten Fernsteuersignalen zumindest teilautomatisiert entfernt zu führen,
**dadurch gekennzeichnet, dass**
das Prüfen (103), ob der Anfrage entsprochen werden kann, ein Prüfen umfasst, ob eine oder mehrere Bedingungen erfüllt sind, wobei der Anfrage nur dann entsprochen wird, wenn eine oder mehrere oder alle der einen oder
der mehreren Bedingungen erfüllt sind,
wobei die eine oder die mehreren Bedingungen jeweils ein Element ausgewählt aus der folgenden Gruppe von Bedingungen sind: die Vorrichtung zum zumindest teilautomatisierten Führen eines Kraftfahrzeugs (501), welche die Schritte des Verfahrens zum zumindest teilautomatisierten Führen eines Kraftfahrzeugs (501) ausführt, ist in Betrieb und vollständig funktionsfähig, Ist-Wetter entspricht einem Soll-Wetter, Ist-Verkehrszustand in einer Umgebung des Kraftfahrzeugs (501) entspricht einem Soll-Verkehrszustand, Ist-Verkehrsinfrastruktur in einer Umgebung des Kraftfahrzeugs (501) entspricht einer Soll-Verkehrsinfrastruktur, Rechenkapazität der Vorrichtung zum zumindest teilautomatisierten Führen eines Kraftfahrzeugs (501) ist gleich oder größer-gleich einem vorbestimmten Rechenkapazitätsschwellwert, die Vorrichtung zum zumindest teilautomatisierten Führen eines Kraftfahrzeugs (501) ist in der Lage, das anfragende Kraftfahrzeug (501) fernzusteuern, das anfragende Kraftfahrzeug (501) ist in der Lage, ferngesteuert zu werden, notwendige Bedingungen für ein ordnungsgemäßes Funktionieren der Fernsteuerung sind erfüllt, das Durchführen der Fernsteuerung wurde bezahlt.

2. Verfahren nach Anspruch 1, wobei die Anfrage eine Anfangsposition (509) oder einen Anfangsbereich umfasst, an welcher oder innerhalb welchen mit dem Fernsteuern des Kraftfahrzeugs (501) begonnen werden soll, wenn sich das Kraftfahrzeug (501) an der Anfangsposition (509) oder innerhalb des Anfangsbereichs befindet, wobei, wenn der Anfrage entsprochen werden kann, die Fernsteuersignale derart erzeugt und ausgegeben werden, dass mit dem Fernsteuern begonnen werden kann, wenn sich das Kraftfahrzeug (501) an der Anfangsposition (509) oder innerhalb des Anfangsbereichs befindet.

3. Verfahren nach Anspruch 1 oder 2, wobei die Anfrage eine Endposition (511) oder einen Endbereich umfasst, an welcher oder innerhalb welchen das Fernsteuern des Kraftfahrzeugs (501) beendet werden soll, wenn sich das Kraftfahrzeug (501) an der Endposition (511) oder innerhalb des Endbereichs befindet, wobei, wenn der Anfrage entsprochen werden kann, die Fernsteuersignale derart erzeugt und ausgegeben werden, dass das Fernsteuern beendet werden kann, wenn sich das Kraftfahrzeug (501) an der Endposition (511) oder innerhalb des Endbereichs befindet

4. Verfahren nach einem der vorherigen Ansprüche, wobei vor einem Beenden des Fernsteuerns des Kraftfahrzeugs (501), weitere Anfragesignale erzeugt und ausgegeben werden, welche eine weitere Anfrage an das Kraftfahrzeug (501) und/oder an einen Führer des Kraftfahrzeugs (501) repräsentieren, dass das zumindest teilautomatisierte entfernte Führen zurück an das Kraftfahrzeug (501) oder an den Führer übergeben werden soll, wobei das Fernsteuern des Kraftfahrzeugs (501) abhängig von einer Reaktion auf die weitere Anfrage beendet wird.

5. Verfahren nach Anspruch 4, wobei bei einem Ausbleiben einer Reaktion des Kraftfahrzeugs (501) und/oder des Führers auf die weitere Anfrage das Erzeugen der Fernsteuersignale ein Erzeugen von Fernsteuersignalen zum ferngesteuerten Überführen des Kraftfahrzeugs (501) in einen sicheren Zustand umfasst, um das Kraftfahrzeug (501) basierend auf den erzeugten Fernsteuersignalen ferngesteuert in einen sicheren Zustand zu überführen.

6. Verfahren nach Anspruch 4 oder 5, wobei bei einem Ausbleiben einer Reaktion des Kraftfahrzeugs (501) und/oder des Führers auf die weitere Anfrage Lichtsignalanlagensteuersignale zum Steuern einer oder mehrerer Lichtsignalanlagen, welche sich in einer Umgebung des Kraftfahrzeugs (501) befinden, derart erzeugt und ausgegeben werden, dass bei einem Steuern der einen oder der mehreren Lichtsignalanlagen basierend auf den Lichtsignalsteuersignalen diese unter Verwendung ihrer Signalbilder einen Verkehr für das Kraftfahrzeug (501) absperren können.

7. Verfahren nach einem der vorherigen Ansprüche, wobei Hinweissignale ausgegeben werden, welche einen Hinweis repräsentieren, dass eine entfernt zumindest teilautomatisierte Führung eines Kraftfahrzeugs möglich ist und/oder vorgegeben ist.

8. Verfahren nach einem der vorherigen Ansprüche, wobei mit dem Fernsteuern des Kraftfahrzeugs begonnen wird, während das Kraftfahrzeug sich bewegt oder während das Kraftfahrzeug steht, und/oder wobei das Fernsteuern des Kraftfahrzeugs beendet wird, während das Kraftfahrzeug sich bewegt oder während das Kraftfahrzeug steht.

9. Verfahren zum zumindest teilautomatisierten Führen eines Kraftfahrzeugs (501), umfassend die folgenden Schritte:
während einer zumindest teilautomatisierten ferngesteuerten Quer- und
Längsführung des Kraftfahrzeugs (501), um das Kraftfahrzeug (501) zumindest teilautomatisiert entfernt zu führen, Empfangen (201) von Anfragesignalen, welche eine Anfrage an das ferngesteuerte Kraftfahrzeug (501) und/oder an einen Führer des ferngesteuerten Kraftfahrzeugs (501) repräsentieren, dass das zumindest teilautomatisierte entfernte Führen zurück an das Kraftfahrzeug (501) oder an den Führer übergeben werden soll,
Prüfen (203) ansprechend auf den Empfang der Anfragesignale, ob der Anfrage entsprochen werden kann,
wenn ja, Erzeugen (205) von Steuersignalen zum zumindest teilautomatisierten Steuern einer Quer- und Längsführung des Kraftfahrzeugs (501) und
Ausgeben (207) der erzeugten Steuersignale, um das Kraftfahrzeug (501) basierend auf den erzeugten Steuersignalen zumindest teilautomatisiert zu führen,
**dadurch gekennzeichnet, dass**.
das Prüfen, ob der Anfrage entsprochen werden kann, ein Prüfen umfasst, ob eine oder mehrere Bedingungen erfüllt sind, wobei der Anfrage nur dann entsprochen wird, wenn eine oder mehrere oder alle der einen oder der mehreren Bedingungen erfüllt sind
wobei die eine oder die mehreren Bedingungen jeweils ein Element ausgewählt aus der folgenden Gruppe von Bedingungen sind: eine kraftfahrzeuginterne Vorrichtung zum zumindest teilautomatisierten Führen eines Kraftfahrzeugs (501), welche die Schritte des Verfahrens zum zumindest teilautomatisierten Führen eines Kraftfahrzeugs (501) ausführen kann, ist in Betrieb und vollständig funktionsfähig, Ist-Wetter entspricht einem Soll-Wetter, Ist-Verkehrszustand in einer Umgebung des Kraftfahrzeugs (501) entspricht einem Soll-Verkehrszustand, Ist-Verkehrsinfrastruktur in einer Umgebung des Kraftfahrzeugs (501) entspricht einer Soll-Verkehrsinfrastruktur, Rechenkapazität der kraftfahrzeuginternen Vorrichtung zum zumindest teilautomatisierten Führen eines Kraftfahrzeugs (501) ist gleich oder größer-gleich einem vorbestimmten Rechenkapazitätsschwellwert, die kraftfahrzeuginterne Vorrichtung zum zumindest teilautomatisierten Führen eines Kraftfahrzeugs (501) ist in der Lage, das zumindest teilautomatisierte Führen zu übernehmen.

10. Vorrichtung (301, 515), die eingerichtet ist, alle Schritte des Verfahrens nach einem der vorherigen Ansprüche auszuführen.

11. Computerprogramm (403), umfassend Befehle, die bei Ausführung des Computerprogramms (403) durch einen Computer diesen veranlassen, ein Verfahren gemäß einem der Ansprüche 1 bis 9 auszuführen.

12. Maschinenlesbares Speichermedium (401), auf dem das Computerprogramm (403) nach Anspruch 11 gespeichert ist.

## Claims

1. Method for guiding a motor vehicle (501) in an at least partially automated manner, comprising the following steps:
receiving (101) request signals which represent a request of the motor vehicle (501) that the motor vehicle (501) is to be remotely controlled in order to guide the motor vehicle (501) remotely in an at least partially automated manner,
checking (103), in response to the request signals being received, whether the request can be met,
if this is the case, generating (105) remote-control signals for remotely controlling lateral and longitudinal guidance of the motor vehicle (501) in an at least partially automated manner, and
outputting (107) the generated remote-control signals in order to guide the motor vehicle (501) remotely in an at least partially automated manner on the basis of the generated remote-control signals,
**characterized in that**
checking (103) whether the request can be met comprises checking whether one or more conditions are satisfied, wherein the request is met only when one or more or all of the one or more conditions is/are satisfied,
wherein the one or more conditions are each an element selected from the following group of conditions: the device for guiding a motor vehicle (501) in an at least partially automated manner, which device executes the steps of the method for guiding a motor vehicle (501) in an at least partially automated manner, is in operation and fully functional, actual weather conditions correspond to target weather conditions, an actual state of traffic in an area surrounding the motor vehicle (501) corresponds to a target state of traffic, an actual traffic infrastructure in an area surrounding the motor vehicle (501) corresponds to a target traffic infrastructure, computational capacity of the device for guiding a motor vehicle (501) in an at least partially automated manner is equal to or greater than or equal to a predetermined computational capacity threshold value, the device for guiding a motor vehicle (501) in an at least partially automated manner is able to remotely control the requesting motor vehicle (501), the requesting motor vehicle (501) is able to be remotely controlled, necessary conditions for proper functioning of the remote control system are satisfied, implementation of the remote control system has been paid for.

2. Method according to Claim 1, wherein the request comprises a starting position (509) or a starting region at which or within which remote control of the motor vehicle (501) is to start when the motor vehicle (501) is at the starting position (509) or within the starting region, wherein, if the request can be met, the remote-control signals are generated and output in such a way that remote control can be started when the motor vehicle (501) is at the starting position (509) or within the starting region.

3. Method according to Claim 1 or 2, wherein the request comprises an end position (511) or an end region at which or within which remote control of the motor vehicle (501) is to be ended when the motor vehicle (501) is at the end position (511) or within the end region, wherein, if the request can be met, the remote-control signals are generated and output in such a way that the remote control can be ended when the motor vehicle (501) is at the end position (511) or within the end region.

4. Method according to one of the preceding claims, wherein, before remote control of the motor vehicle (501) is ended, further request signals are generated and output, these request signals representing a further request to the motor vehicle (501) and/or to a driver of the motor vehicle (501) that the remote guidance in an at least partially automated manner is to be passed back to the motor vehicle (501) or to the driver, wherein the remote control of the motor vehicle (501) is ended depending on a response to the further request.

5. Method according to Claim 4, wherein, in the absence of a response by the motor vehicle (501) and/or the driver to the further request, generating the remote-control signals comprises generating remote-control signals for moving the motor vehicle (501) to a safe state in a remotely controlled manner in order to move the motor vehicle (501) to a safe state in a remotely controlled manner on the basis of the generated remote-control signals.

6. Method according to Claim 4 or 5, wherein, in the absence of a response by the motor vehicle (501) and/or the driver to the further request, traffic light system control signals for controlling one or more traffic light systems, which are located in an area surrounding the motor vehicle (501), are generated and output in such a way that, when the one or more traffic light systems are controlled on the basis of the traffic light control signals, they can stop traffic for the motor vehicle (501) using their signal images.

7. Method according to one of the preceding claims, wherein indication signals are output which represent an indication that remote guidance of a motor vehicle in an at least partially automated manner is possible and/or is prescribed.

8. Method according to one of the preceding claims, wherein remote control of the motor vehicle is started while the motor vehicle is moving or while the motor vehicle is stationary, and/or wherein remote control of the motor vehicle is ended while the motor vehicle is moving or while the motor vehicle is stationary.

9. Method for guiding a motor vehicle (501) in an at least partially automated manner, comprising the following steps:
during remotely controlled lateral and longitudinal guidance of the motor vehicle (501) in an at least partially automated manner in order to remotely guide the motor vehicle (501) in an at least partially automated manner, receiving (201) request signals which represent a request to the remotely controlled motor vehicle (501) and/or to a driver of the remotely controlled motor vehicle (501) that the remote guidance in an at least partially automated manner is to be passed back to the motor vehicle (501) or to the driver,
checking (203), in response to the request signals being received, whether the request can be met,
if this is the case, generating (205) control signals for controlling lateral and longitudinal guidance of the motor vehicle (501) in an at least partially automated manner, and
outputting (207) the generated control signals in order to guide the motor vehicle (501) in an at least partially automated manner on the basis of the generated control signals,
**characterized in that**
checking whether the request can be met comprises checking whether one or more conditions are satisfied, wherein the request is met only when one or more or all of the one or more conditions is/are satisfied,
wherein the one or more conditions are each an element selected from the following group of conditions: a motor vehicle-internal device for guiding a motor vehicle (501) in an at least partially automated manner, which device can execute the steps of the method for guiding a motor vehicle (501) in an at least partially automated manner, is in operation and fully functional, actual weather conditions correspond to target weather conditions, an actual state of traffic in an area surrounding the motor vehicle (501) corresponds to a target state of traffic, an actual traffic infrastructure in an area surrounding the motor vehicle (501) corresponds to a target traffic infrastructure, computational capacity of the motor vehicle-internal device for guiding a motor vehicle (501) in an at least partially automated manner is equal to or greater than or equal to a predetermined computational capacity threshold value, the motor vehicle-internal device for guiding a motor vehicle (501) in an at least partially automated manner is able to assume guidance in an at least partially automated manner.

10. Device (301, 515) which is designed to execute all the steps of the method according to one of the preceding claims.

11. Computer program (403) comprising commands which, when the computer program (403) is run by a computer, prompt said computer to execute a method according to one of Claims 1 to 9.

12. Machine-readable storage medium (401) on which the computer program (403) according to Claim 11 is stored.

## Revendications

1. Procédé de guidage au moins partiellement automatisé d'un véhicule automobile (501), comprenant les étapes suivantes :
réception (101) de signaux de requête, lesquels représentent une requête du véhicule automobile (501) selon laquelle le véhicule automobile (501) doit être commandé à distance afin de guider le véhicule automobile (501) à distance de manière au moins partiellement automatisée,
vérification (103), en réaction à la réception des signaux de requête, s'il est possible de satisfaire à la requête,
dans l'affirmative, génération (105) de signaux de commande à distance en vue de la commande à distance au moins partiellement automatisée d'un guidage transversal et longitudinal du véhicule automobile (501) et
délivrance en sortie (107) des signaux de commande à distance générés afin de guider le véhicule automobile (501) à distance de manière au moins partiellement automatisée en se basant sur les signaux de commande à distance générés,
**caractérisé en ce que**
la vérification (103) s'il est possible de satisfaire à la requête comprend une vérification si une ou plusieurs conditions sont remplies, la requête n'étant satisfaite que si une ou plusieurs ou la totalité de l'une ou des plusieurs conditions sont remplies,
l'une ou les plusieurs conditions étant respectivement un élément choisi du groupe de conditions suivant : le dispositif servant au guidage au moins partiellement automatisé d'un véhicule automobile (501), lequel exécute les étapes du procédé de guidage au moins partiellement automatisé d'un véhicule automobile (501), est en service et pleinement apte à fonctionner, les conditions météorologiques réelles correspondent à des conditions météorologiques de consigne, l'état du trafic réel dans un environnement du véhicule automobile (501) correspond à un état du trafic de consigne, l'infrastructure de circulation réelle dans un environnement du véhicule automobile (501) correspond à une infrastructure de circulation de consigne, la capacité de calcul du dispositif servant au guidage au moins partiellement automatisé d'un véhicule automobile (501) est égale, ou égale ou supérieure, à une valeur de seuil de capacité de calcul prédéterminée, le dispositif servant au guidage au moins partiellement automatisé d'un véhicule automobile (501) est en mesure de commander à distance le véhicule automobile (501) requérant, le véhicule automobile (501) requérant est en mesure d'être commandé à distance, les conditions nécessaires pour un fonctionnement en toute conformité de la commande à distance sont remplies, la réalisation de la commande à distance a été payée.

2. Procédé selon la revendication 1, la requête comprenant une position de départ (509) ou une zone de départ au niveau de laquelle ou à l'intérieur de laquelle doit commencer la commande à distance du véhicule automobile (501) lorsque le véhicule automobile (501) se trouve au niveau de la position de départ (509) ou à l'intérieur de la zone de départ, les signaux de commande à distance, lorsque la requête peut être satisfaite, étant générés et délivrés en sortie de telle sorte que la commande à distance peut commencer lorsque le véhicule automobile (501) se trouve au niveau de la position de départ (509) ou à l'intérieur de la zone de départ.

3. Procédé selon la revendication 1 ou 2, la requête comprenant une position de fin (511) ou une zone de fin au niveau de laquelle ou à l'intérieur de laquelle doit prendre fin la commande à distance du véhicule automobile (501) lorsque le véhicule automobile (501) se trouve au niveau de la position de fin (511) ou à l'intérieur de la zone de fin, les signaux de commande à distance, lorsque la requête peut être satisfaite, étant générés et délivrés en sortie de telle sorte que la commande à distance peut prendre fin lorsque le véhicule automobile (501) se trouve au niveau de la position de fin (511) ou à l'intérieur de la zone de fin.

4. Procédé selon l'une des revendications précédentes, des signaux de requête supplémentaires étant générés et délivrés en sortie avant une fin de la commande à distance du véhicule automobile (501), lesquels représentent une requête supplémentaire au véhicule automobile (501) et/ou à un conducteur du véhicule automobile (501), selon laquelle le guidage à distance au moins partiellement automatisé doit être remis au véhicule automobile (501) ou au conducteur, la commande à distance du véhicule automobile (501) prenant fin en fonction d'une réaction à la requête supplémentaire.

5. Procédé selon la revendication 4, la génération des signaux de commande à distance comprenant, dans le cas d'une absence d'une réaction du véhicule automobile (501) et/ou du conducteur à la requête supplémentaire, une génération de signaux de commande à distance servant au transfert commandé à distance du véhicule automobile (501) dans un état sécurisé afin de transférer le véhicule automobile (501) dans un état sécurisé par commande à distance en se basant sur les signaux de commande à distance générés.

6. Procédé selon la revendication 4 ou 5, des signaux de commande d'équipement de signalisation lumineuse destinés à commander un ou plusieurs équipements de signalisation lumineuse, lesquels se trouvent dans un environnement du véhicule automobile (501), étant générés et délivrés en sortie dans le cas d'une absence d'une réaction du véhicule automobile (501) et/ou du conducteur à la requête supplémentaire de telle sorte que, lors d'une commande de l'un ou des plusieurs équipements de signalisation lumineuse en se basant sur les signaux de commande d'équipement de signalisation lumineuse, ceux-ci peuvent bloquer un trafic pour le véhicule automobile (501) en utilisant leur signalisation.

7. Procédé selon l'une des revendications précédentes, des signaux de notification étant délivrés en sortie, lesquels représentent une notification selon laquelle un guidage à distance au moins partiellement automatisé d'un véhicule automobile est possible et/ou prédéfini.

8. Procédé selon l'une des revendications précédentes, la commande à distance du véhicule automobile commençant pendant que le véhicule automobile se déplace ou pendant que le véhicule automobile est à l'arrêt, et/ou la commande à distance du véhicule automobile prenant fin pendant que le véhicule automobile se déplace ou pendant que le véhicule automobile est à l'arrêt.

9. Procédé de guidage au moins partiellement automatisé d'un véhicule automobile (501), comprenant les étapes suivantes :
pendant un guidage transversal et longitudinal du véhicule automobile (501) commandé à distance de manière au moins partiellement automatisée en vue de guider le véhicule automobile (501) à distance de manière au moins partiellement automatisée, réception (201) de signaux de requête, lesquels représentent une requête au véhicule automobile (501) commandé à distance et/ou à un conducteur du véhicule automobile (501) commandé à distance selon laquelle le guidage à distance au moins partiellement automatisé doit être remis au véhicule automobile (501) ou au conducteur,
vérification (203), en réaction à la réception des signaux de requête, s'il est possible de satisfaire à la requête,
dans l'affirmative, génération (205) de signaux de commande en vue de la commande au moins partiellement automatisée d'un guidage transversal et longitudinal du véhicule automobile (501) et
délivrance en sortie (207) des signaux de commande générés afin de guider le véhicule automobile (501) de manière au moins partiellement automatisée en se basant sur les signaux de commande générés,
**caractérisé en ce que**
la vérification s'il est possible de satisfaire à la requête comprend une vérification si une ou plusieurs conditions sont remplies, la requête n'étant satisfaite que si une ou plusieurs ou la totalité de l'une ou des plusieurs conditions sont remplies,
l'une ou les plusieurs conditions étant respectivement un élément choisi du groupe de conditions suivant : un dispositif interne au véhicule automobile servant au guidage au moins partiellement automatisé d'un véhicule automobile (501), lequel peut exécuter les étapes du procédé de guidage au moins partiellement automatisé d'un véhicule automobile (501), est en service et pleinement apte à fonctionner, les conditions météorologiques réelles correspondent à des conditions météorologiques de consigne, l'état du trafic réel dans un environnement du véhicule automobile (501) correspond à un état du trafic de consigne, l'infrastructure de circulation réelle dans un environnement du véhicule automobile (501) correspond à une infrastructure de circulation de consigne, la capacité de calcul du dispositif interne au véhicule automobile servant au guidage au moins partiellement automatisé d'un véhicule automobile (501) est égale, ou égale ou supérieure, à une valeur de seuil de capacité de calcul prédéterminée, le dispositif interne au véhicule automobile servant au guidage au moins partiellement automatisé d'un véhicule automobile (501) est en mesure de prendre en charge le guidage au moins partiellement automatisé.

10. Dispositif (301, 515), qui est conçu pour exécuter toutes les étapes du procédé selon l'une des revendications précédentes.

11. Programme informatique (403), comprenant des instructions qui, lors de l'exécution du programme informatique (403) par un ordinateur, amènent celui-ci à mettre en œuvre un procédé selon l'une des revendications 1 à 9.

12. Support d'enregistrement lisible par machine (401) sur lequel est enregistré le programme informatique (403) selon la revendication 11.
